(19) Europäisches Patentamt / European Patent Office / Office européen des brevets

(11) **EP 1 848 146 A1**

(12) **DEMANDE DE BREVET EUROPEEN**

(43) Date de publication:
    **24.10.2007 Bulletin 2007/43**

(51) Int Cl.:
    ***H04L 12/10*** *(2006.01)*     *H04L 12/44* *(2006.01)*

(21) Numéro de dépôt: **06300387.5**

(22) Date de dépôt: **21.04.2006**

(84) Etats contractants désignés:
    **AT BE BG CH CY CZ DE DK EE ES FI FR GB GR HU IE IS IT LI LT LU LV MC NL PL PT RO SE SI SK TR**
    Etats d'extension désignés:
    **AL BA HR MK YU**

(71) Demandeur: **Alcatel Lucent**
    **75008 Paris (FR)**

(72) Inventeurs:
    • **Le Creff, Michel**
      **95450, VIGNY (FR)**
    • **Gass, Raymond**
      **67150, Bolsenheim (FR)**

(74) Mandataire: **Sciaux, Edmond**
    **Alcatel Lucent**
    **Intellectual Property & Standards**
    **54 rue La Boétie**
    **75008 Paris (FR)**

(54) **Procédé de téléalimentation d'un terminal dans un réseau informatique local**

(57)     Procédé de téléalimentation d'un terminal dans un réseau informatique local au moyen d'un dispositif de téléalimentation, caractérisé en ce qu'il comprend les opérations consistant à :
- détecter au sein du terminal un besoin de changement de la puissance électrique requise par celui-ci ;
- générer une requête de changement de puissance ;
- déterminer si cette requête est acceptable ;
- si cette requête est décrétée acceptable, allouer une nouvelle puissance à délivrer au terminal par le dispositif de téléalimentation, égale à la nouvelle puissance requise ;
- si cette requête est décrétée inacceptable, maintenir l'allocation actuelle de la puissance à délivrer par le dispositif de téléalimentation au terminal.

FIG.3

Printed by Jouve, 75001 PARIS (FR)

EP 1 848 146 A1

**Description**

L'invention a trait à la téléalimentation des terminaux dans les réseaux informatiques locaux, par exemple de type Ethernet. Plus précisément, elle concerne un procédé de téléalimentation d'un terminal dans un réseau informatique local, ainsi qu'un dispositif de téléalimentation et un terminal adaptés pour la mise en oeuvre d'un tel procédé.

Dans un réseau informatique ordinaire, les équipements connectés à un réseau local (couramment appelé réseau LAN : *Local Area Network),* tels qu'ordinateurs, points d'accès sans fil, webcaméras, etc., sont alimentés localement par le secteur, indépendamment des liaisons de données du réseau.

Pour remédier aux difficultés (notamment de risques électriques) soulevées par cette séparation entre l'alimentation en puissance et la transmission de données, des solutions de téléalimentation des terminaux ont récemment été proposées.

Citons par exemple, pour les réseaux Ethernet, le nouveau standard *803.2af* de l'*IEEE,* également appelé PoE, *Power over Ethernet,* qui propose d'alimenter les équipements par le câble Ethernet lui-même.

L'une des applications les plus prometteuses - mais non la seule - de la téléalimentation est la téléphonie informatique, qui tend à se généraliser dans les entreprises par la constitution de réseaux utilisant le protocole IP (technologie couramment appelée VoIP, *Voice over Internet Protocol*). De tels réseaux emploient des téléphones adaptés, appelés *téléphones IP,* qui numérisent la parole téléphonique et constituent des paquets IP, ces paquets étant ensuite placés dans une trame et transmis sur le réseau Ethernet.

Un avantage des solutions de téléalimentation est de sécuriser l'alimentation électrique du réseau, qui devient ainsi insensible aux aléas du secteur. Un autre avantage est de permettre l'économie de transformateurs électriques pour chacun des équipements.

La téléalimentation n'est cependant pas sans poser un certain nombre de difficultés.

Une première difficulté concerne l'identification des terminaux téléalimentés. Plus précisément, on doit toujours pouvoir raccorder au réseau un terminal non téléalimenté, à condition toutefois de ne pas lui fournir de puissance, ce qui l'endommagerait. La demande de brevet européen n° EP 1 100 226 (Alcatel) remédie à ce problème au moyen d'un procédé permettant de discriminer les terminaux téléalimentés et limiter ainsi la fourniture de puissance à ce type de terminal.

Une deuxième difficulté concerne la quantité de puissance électrique allouée à chaque terminal par le dispositif de téléalimentation.

Précisons que les terminaux téléalimentés (tels que les téléphones IP) sont à ce jour classés par catégorie ou « classe » de puissance, en fonction de la puissance maximale consommée. Les terminaux téléalimentés, par exemple ceux compatibles avec le standard *IEEE 803.2af* précité, intègrent une signature spécifique, dite signature de téléalimentation (par exemple sous forme d'une impédance prédéterminée), caractéristique de la puissance maximale consommée par le terminal.

Le standard *IEEE 803.2af* définit quatre classes de puissance, numérotées de 0 à 3 et auxquelles sont affectées les puissances listées dans le tableau ci-dessous (Source : *IEEE Std 802.3 af[TM]-2003,* IEEE Computer Society, Juin 2003, p.41) :

| Classe | Puissance minimale à la sortie du dispositif de téléalimentation |
|--------|------------------------------------------------------------------|
| 0 | 15,4 W |
| 1 | 4,0 W |
| 2 | 7,0 W |
| 3 | 15,4 W |

La détection par le dispositif de téléalimentation de la signature de téléalimentation d'un terminal entraîne l'allocation à celui-ci d'une puissance correspondant à la classe de l'équipement. Par défaut, les terminaux se voient attribuer la classe 0. En d'autres termes, la puissance allouée par défaut à un équipement téléalimenté est de 15,4 W.

On comprend qu'avec la multiplication des terminaux raccordés à un même dispositif de téléalimentation, on se trouve rapidement confronté à un problème de limitation de la puissance électrique disponible. La solution la plus simple consiste à remplacer le dispositif de téléalimentation par un dispositif plus puissant. Cette solution n'est toutefois pas satisfaisante, car elle est onéreuse et nécessite une intervention sur le réseau dont il est nécessaire d'interrompre, au moins momentanément, les transmissions.

L'invention vise notamment à remédier à ces inconvénients en proposant un procédé de téléalimentation permettant de minimiser la puissance électrique fournie par les dispositifs de téléalimentation.

A cet effet, l'invention propose, suivant un premier objet, un procédé de téléalimentation d'un terminal dans

EP 1 848 146 A1

un réseau informatique local au moyen d'un dispositif de téléalimentation, caractérisé en ce qu'il comprend les opérations consistant à :

- détecter au sein du terminal un besoin de changement de la puissance électrique requise par celui-ci ;
- générer une requête de changement de puissance ;
- déterminer si cette requête est acceptable ;
- si cette requête est décrétée acceptable, allouer une nouvelle puissance à délivrer au terminal par le dispositif de téléalimentation, égale à la nouvelle puissance requise ;
- si cette requête est décrétée inacceptable, maintenir l'allocation actuelle de puissance à délivrer par le dispositif de téléalimentation au terminal.

Les inventeurs ont fait le constat que, dans la pratique, la consommation électrique de certains terminaux n'est pas constante au cours du temps. C'est notamment le cas des téléphones IP, qui en fonction de leur mode de fonctionnement (raccroché, en communication simple, en mains libres, etc.) peuvent voir leur consommation électrique varier du simple au double, ou plus encore. C'est également le cas des ordinateurs portables, dont la consommation électrique varie aussi en fonction du mode de fonctionnement, par exemple lors du passage du mode veille en un mode fonctionnel (en mode fonctionnel la consommation électrique peut varier dans de grandes proportions) ou lorsque des périphériques (souris, disques durs externes, webcaméras, etc.) lui sont connectés.

En régulant la puissance allouée par le dispositif de téléalimentation au terminal en fonction du mode de fonctionnement de celui-ci, on optimise la puissance totale fournie par le dispositif de téléalimentation. Il en résulte de substantielles économies d'énergie et de coût.

Suivant un mode de mise en oeuvre, la détermination du caractère acceptable de la requête de changement de puissance comprend les opérations consistant à :

- calculer la nouvelle puissance totale à fournir par le dispositif de téléalimentation ; et
- comparer cette nouvelle puissance totale à fournir à une puissance maximale admise prédéterminée.

La requête est décrétée acceptable si la nouvelle puissance totale à fournir par le dispositif de téléalimentation est inférieure à la puissance maximale admise, et inacceptable si la nouvelle puissance totale à fournir par le dispositif de téléalimentation est supérieure à la puissance maximale admise.

La détermination du caractère acceptable de la requête de changement de puissance comprend de préférence une opération consistant à comparer d'abord la nouvelle puissance requise à la puissance actuelle allouée au terminal, la requête de changement de puissance étant décrétée acceptable si la nouvelle puissance requise est inférieure à la puissance actuelle allouée.

Peut en outre être prévue une opération supplémentaire de transmission au terminal d'une information (sous forme d'un signal ou d'un message de données) d'acceptation ou de refus de la requête de changement de puissance, selon le caractère acceptable ou non de celle-ci.

La formulation par le terminal de la requête de changement de puissance se traduit par la mise à disposition par le terminal d'une information prise en compte par le dispositif de téléalimentation. Cette information peut prendre diverses formes. Il peut s'agir d'un signal particulier transmis par le terminal au dispositif de téléalimentation, ou d'un agencement particulier d'éléments de circuits électriques ou électroniques contribuant à la transmission de signaux particuliers sur la ligne reliant le terminal au dispositif de téléalimentation (on parle alors de « signature »), ou encore d'un message particulier de données découlant de la compilation d'un programme implémenté sur un processeur du terminal et transmis par ce dernier au dispositif de téléalimentation. Quelle que soit sa forme, l'information mise à disposition par le terminal a pour effet la prise en compte par le dispositif de téléalimentation de la requête de changement de puissance formulée par le terminal.

Ainsi, suivant un premier mode de mise en oeuvre, la génération de la requête de changement de puissance comprend les opérations consistant pour le terminal à :

- sélectionner parmi une pluralité de classes de puissances différentes une classe correspondant à la nouvelle puissance requise ; et
- produire une signature correspondant à la classe de puissance sélectionnée ;

la détermination du caractère acceptable de la requête de changement de puissance comprenant alors une opération d'identification par le dispositif de téléalimentation de la signature produite par le terminal.

Suivant un second mode de mise en oeuvre, la génération de la requête de changement de puissance comprend les opérations consistant pour le terminal à :

3

- sélectionner parmi une pluralité de classes de puissances différentes une classe correspondant à la nouvelle puissance requise ; et
- générer et envoyer au dispositif de téléalimentation un message de données correspondant à la classe de puissance sélectionnée ;

la détermination du caractère acceptable de la requête de changement de puissance comprenant alors une opération d'interprétation par le dispositif de téléalimentation du message envoyé par le terminal.

L'invention propose, suivant un deuxième objet, un dispositif de téléalimentation d'un terminal dans un réseau local, ce dispositif comprenant :

- des moyens de détection d'une requête de changement de puissance générée par le terminal ; et
- des moyens pour déterminer le caractère recevable de la requête de changement de puissance.

Ce dispositif de téléalimentation peut également comprendre des moyens de transmission au terminal d'une information (signal ou message de données) caractéristique de l'acceptation ou non de la requête de changement de puissance.

Plus précisément, le dispositif de téléalimentation peut comprendre :

- des moyens d'identification d'une signature produite par le terminal, caractéristique de la nouvelle puissance requise, et
- des moyens pour déduire de cette signature la nouvelle puissance requise ;
- des moyens de calcul d'une puissance totale à fournir par le dispositif de téléalimentation, en fonction de la nouvelle puissance requise par le terminal,
- des moyens de comparaison de cette puissance totale à fournir avec une puissance maximale admissible ; et
- des moyens de comparaison de la nouvelle puissance requise par le terminal avec la puissance actuelle allouée.

L'invention propose, suivant un troisième objet, un terminal téléalimenté, qui comprend :

- des moyens pour détecter un besoin de changement de la puissance requise par le terminal ; et
- des moyens pour produire une requête de changement de puissance.

Plus précisément, le terminal peut comprendre :

- des moyens pour sélectionner parmi une pluralité de classes de puissance prédéterminées une classe correspondant à une nouvelle puissance requise ;
- des moyens pour produire une information (notamment sous forme d'une signature ou d'un message de données) caractéristique de la classe de puissance sélectionnée ;
- des moyens pour détecter une information d'acceptation ou de refus de la requête de changement de puissance ;
- des moyens pour :

- soit changer de mode de fonctionnement après détection d'une information d'acceptation de la requête de changement de puissance,
- soit maintenir le mode de fonctionnement actuel après détection d'une information de refus de la requête de changement de puissance.

D'autres objets et avantages de l'invention apparaîtront à la lumière de la description faite ci-après en référence aux dessins annexés dans lesquels :

- la figure 1 est un schéma représentant de manière synthétique un réseau local de type Ethernet ;
- la figure 2 est un schéma synoptique montrant l'association d'un équipement muni d'un dispositif de téléalimentation et d'un terminal téléalimenté ;
- la figure 3 est un diagramme illustrant les différentes étapes d'un procédé de téléalimentation optimisée d'un terminal au sein d'un réseau de type Ethernet tel que celui de la figure 1 ;
- la figure 4 est un diagramme montrant les variations du courant circulant dans la ligne Ethernet, qui illustrent la présentation par le terminal d'une requête de changement de puissance, et
- la figure 5 rassemble quatre diagrammes montrant les variations respectives :

- du courant circulant dans la ligne Ethernet,

- de la tension d'alimentation du terminal, fournie par le dispositif de téléalimentation,
- d'une tension d'identification fournie par le dispositif de téléalimentation, et
- d'un courant d'identification fourni par le terminal en réponse à la tension d'identification,

ces variations illustrant la présentation par le terminal d'une requête de changement de puissance et la réponse à cette requête par le dispositif de téléalimentation.

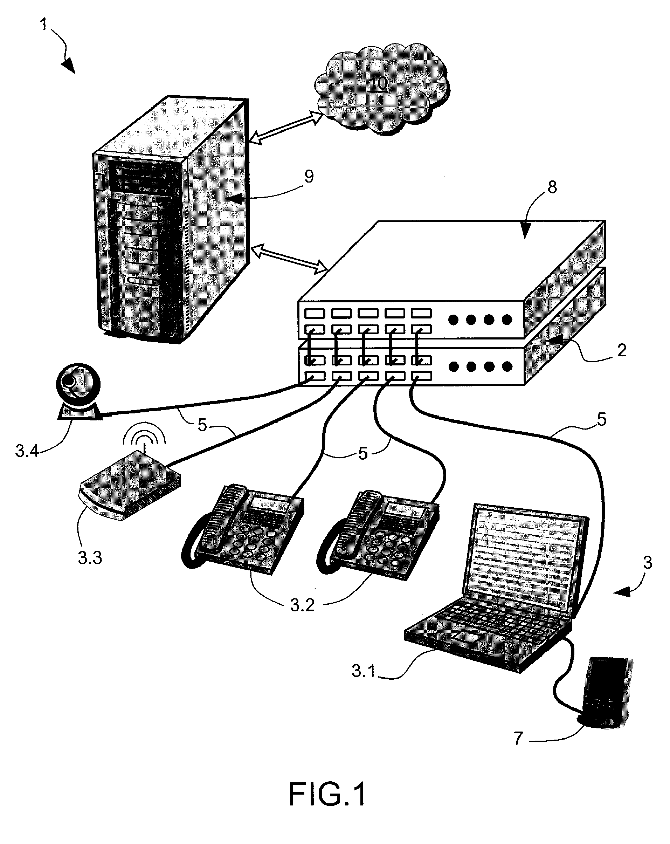

Sur la figure 1 est représenté un réseau local (LAN) 1 de type Ethernet, qui comprend un dispositif 2 de téléalimentation (désigné dans la littérature et dans ce qui suit par son acronyme anglais PSE, « Power Source Equipment ») et, reliés à celui-ci, une pluralité N d'équipements 3 téléalimentés (désignés dans la littérature par le sigle PD, acronyme de la dénomination anglaise « Powered Device »), ci-après simplement dénommés « terminaux ».

Le PSE 2 se présente en l'occurrence sous la forme d'un répéteur, muni d'une unité 4 intégrée de téléalimentation, les terminaux 3 pouvant quant à eux se présenter sous la forme d'un ordinateur portable 3.1, de deux téléphones IP 3.2, d'un point d'accès LAN sans fil 3.3, ou encore d'une webcaméra 3.4 (cette liste étant non exhaustive), reliés au répéteur par des câbles ou « lignes » Ethernet 5 à quatre paires de fils 5.1, 5.2, 5.3, 5.4 et munis chacun d'une alimentation 6 intégrée dont la puissance est fournie par l'unité de téléalimentation 4 du PSE 2.

A chaque terminal peut en outre être relié au moins un périphérique 7, par exemple par l'intermédiaire de ports USB ou PCMCIA. En l'occurrence, on a représenté un organiseur personnel 7 (usuellement désigné par le sigle PDA, correspondant à la dénomination anglaise « Personal Data Assistant »), relié à l'ordinateur portable 3.1 par l'intermédiaire duquel il est alimenté.

Le réseau 1 comprend en outre, dans l'exemple illustré, un commutateur 8 (qui peut être téléalimenté ou non), relié d'une part au répéteur 2 et d'autre part à un serveur 9 de réseau local, lequel est par ailleurs relié à un réseau 10 métropolitain (MAN) ou étendu (WAN, par exemple Internet). Dans une version optimisée, le réseau 1 est dépourvu de répéteur, le PSE étant alors le commutateur 8 lui-même, qui intègre les moyens nécessaires pour pourvoir à la téléalimentation des terminaux 3 via les lignes Ethernet 5.

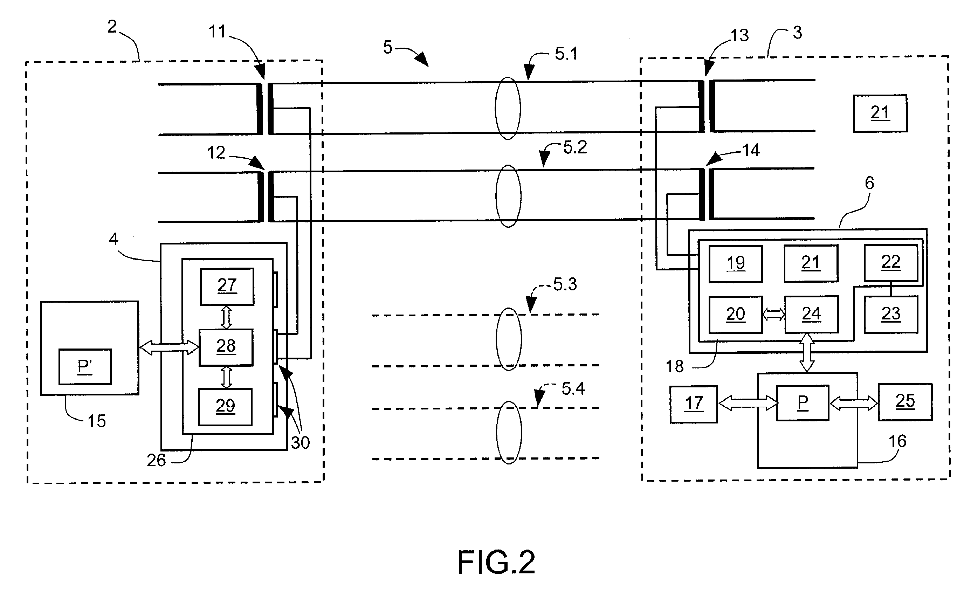

On a représenté très schématiquement sur la figure 2 le raccordement d'un terminal 3 (par exemple un téléphone IP 3.2) à un PSE 2 (par exemple le répéteur). Comme cela est visible sur la figure, deux paires de fil 5.1, 5.2 sont utilisées à la fois pour la l'émission et la réception de données d'une part, et pour la téléalimentation du terminal 3 d'autre part. A cet effet, le PSE 2 comprend deux transformateurs 11, 12 ayant chacun deux enroulements dont l'un est relié à l'unité 4 de téléalimentation, le terminal 3 comprenant, de manière correspondante, deux transformateurs 13, 14 ayant chacun deux enroulement dont l'un est relié à l'alimentation 6. Les deux autres paires de fil 5.3, 5.4 du câble 5 sont ici inutilisées.

Principes

On cherche à minimiser la puissance totale fournie par le PSE 2, afin de faire des économies d'énergie et de réduire au sein du réseau 1 le nombre total de PSE.

La puissance totale fournie par le PSE 2, notée $P_F$, est égale à la somme des puissances unitaires $P_{Fi}$ (où $1 \leq i \leq N$) fournies (ou allouées) à chaque terminal 3 :

$$P_F = \sum_i P_{Fi}$$

Afin de minimiser cette puissance, on contrôle en permanence (par exemple à intervalles réguliers) la puissance allouée à chaque terminal 3 en fonction de la puissance requise par celui-ci.

Pour cela, on définit pour un terminal 3 donné (par exemple un téléphone IP 3.2) plusieurs modes de fonctionnement requérant chacun une puissance différente.

A chaque mode de fonctionnement correspond une puissance prédéterminée permettant au terminal 3 de fonctionner suivant ce mode. On définit pour chaque mode de fonctionnement une classe correspondant à sa puissance (cette classe n'étant pas nécessairement confondue avec l'une des classes de téléalimentation préconisées par le standard *IEEE 803.2af* et listées le tableau ci-dessus), chaque classe étant mémorisée à la fois dans le terminal et dans le PSE.

Le tableau ci-dessous illustre un exemple de segmentation du fonctionnement d'un téléphone IP en plusieurs modes, à chacun desquels sont affectés, d'une part une puissance prédéterminée, et d'autre part une classe correspondant à cette puissance.

| Mode de fonctionnement | Description | Puissance | Classe |
|---|---|---|---|
| Veille | - Téléphone raccroché | 0,5 W | 1 |
| Faible puissance | - Appel normal sans mains libres<br>- Pas de rétroéclairage de l'écran | 2 W | 2 |
| Moyenne puissance | - Appel normal avec ou sans mains libres<br>- Rétroéclairage<br>- Oreillette sans fil | 5 W | 3 |
| Puissance élevée | - Appel avec vidéo<br>- Téléphone avec prise(s) USB | 10 W | 4 |

Une telle segmentation est donnée à titre purement indicatif. En fonction de la nature et des besoins de chaque terminal 3, on peut définir une segmentation différente, comprenant plus ou moins de classes.

On peut ainsi définir plusieurs dizaines de classes, correspondant chacune à une puissance différente. Par exemple, on peut définir 30 classes correspondant à des puissances allant de 0,5W à 15W par pas de 0,5W. Il va de soi que plus le terminal 3 comprend de modes de fonctionnement différents, plus le nombre de classes est élevé. Pour un ordinateur portable par exemple, on peut définir des classes différentes pour chacun des modes de fonctionnement suivants (liste non limitative) :

- ordinateur éteint,
- ordinateur allumé avec économiseur d'écran actif,
- ordinateur et écran allumés,
- lecteur interne (tel que CD-ROM) actif,
- branchement sur port USB d'un périphérique à faible consommation d'énergie (tel que souris, clé USB, etc.),
- branchement sur port USB d'un périphérique à consommation moyenne d'énergie (tel que PDA, lecteur de disque externe, etc.),
- branchement sur port USB d'un périphérique à forte consommation d'énergie (tel que disque dur).

Régulation de la puissance allouée

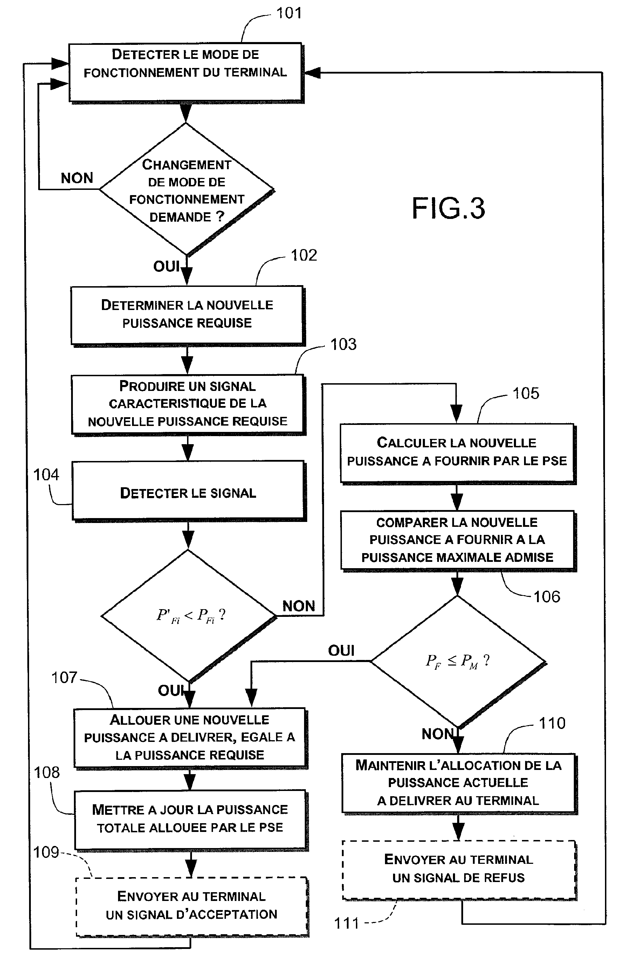

Pour réguler la puissance allouée à chaque terminal 3, on procède comme suit (Cf. figure 3).

Une première opération 101 consiste à détecter en permanence le mode de fonctionnement du terminal 3. Dès lors qu'un changement de mode de fonctionnement est détecté, par exemple lorsque l'utilisateur d'un téléphone IP initialement en mode faible puissance active la fonction mains libres, ou lorsque l'utilisateur d'un ordinateur portable branche un PDA sur un port USB de celui-ci, une deuxième opération 102 consiste, pour le terminal 3, à déterminer la nouvelle puissance requise $P'_{Fi}$ (que cette nouvelle puissance requise soit supérieure ou inférieure à la puissance $P_{Fi}$ allouée actuelle), une troisième opération 103 consistant à formuler une requête de changement de puissance désignant la classe correspondante, sous la forme d'un signal détecté par le PSE 2.

Ce signal, caractéristique de la nouvelle puissance requise $P'_{Fi}$, peut être produit de deux manières distinctes au moins.

Suivant un premier mode de réalisation, le signal se présente sous la forme d'un message de données communiqué, via le réseau 1, par le terminal 3 au PSE 2, lequel analyse le message, par exemple par l'intermédiaire d'un processeur 15.

Suivant un deuxième mode de réalisation, le terminal 3 produit lors de la troisième opération 103 une signature désignant la classe correspondant à la nouvelle puissance requise $P'_{Fi}$, cette signature (dite signature de classe) étant directement identifiée par le PSE 2 lors d'une quatrième opération 104 dite de détection. Cette deuxième solution est préférable à la première, dans la mesure où ne nécessite pas de programmer dans le terminal 3 l'adresse réseau du PSE 2. Concrètement, pour commander la lecture par le PSE 2 de la signature de classe, le terminal 3 peut être programmé pour précéder la production de la signature d'une interruption momentanée, ou d'une modulation, du courant circulant sur la ligne 5. Nous verrons ci-après plus en détail la manière dont la signature est produite par le terminal 3 et identifiée par le PSE 2.

Une fois la signature identifiée par le PSE 2, celui-ci en déduit la nouvelle puissance requise $P'_{Fi}$ et recalcule (opération 105) la puissance totale $P_F$ qu'il doit fournir à l'ensemble des terminaux 3 qui lui sont connectés.

Cette nouvelle puissance à fournir $P_F$ est alors comparée (opération 106) à une puissance maximale admise $P_M$, prédéterminée, par exemple égale à la puissance maximale que peut effectivement fournir le PSE 2, ou à cette puissance maximale $P_M$, diminuée d'une marge de sécurité correspondant à la puissance nécessaire qu'il peut être nécessaire d'allouer à certains terminaux particuliers non régulés (par exemple, dans le cadre de la téléphonie IP, les téléphones de cadres dirigeants ou d'infirmerie bénéficient en permanence d'une allocation de puissance correspondant à leur puissance maximale).

Tant que la nouvelle puissance totale à fournir $P_F$ ne dépasse pas la puissance maximale admise $P_M$ ($P_F \leq P_M$), le PSE 2 décrète acceptable la requête de changement de puissance, règle (opération 107) la puissance allouée au terminal 2 à la valeur de la nouvelle puissance requise $P'_{Fi}$ et effectue en conséquence une mise à jour de sa puissance totale allouée (opération 108).

Une opération suivante 109 consiste pour le PSE 2 à envoyer au terminal 3 un signal d'acceptation, analysé par un processeur 16 du terminal 3. Le terminal 3 adopte en conséquence le nouveau mode de fonctionnement correspondant à la nouvelle puissance allouée. Dans l'exemple du téléphone IP 3.2 décrit ci-dessus, le téléphone 3.2 effectue les opérations demandées par l'utilisateur. Dans l'exemple de l'ordinateur portable 3.1, celui-ci alimente le PDA 7 connecté.

Par contre, si la nouvelle puissance totale à fournir $P_F$ dépasse la puissance maximale admise $P_M$ ($P_F > P_M$), le PSE 2 décrète inacceptable la requête de changement de puissance : il maintient en conséquence la puissance $P_{Fi}$ allouée au terminal 3 (opération 110) et lui envoie (opération 111) un signal de refus, par exemple sous la forme d'une inversion de polarité ou d'un temps de réponse (comme nous le verrons ci-après).

Le mode de fonctionnement du terminal 3 reste alors inchangé. Dans le cas du téléphone IP 3.2 décrit ci-dessus, celui-ci peut être conçu pour avertir l'utilisateur que les commandes dont il a demandé l'activation sont indisponibles. Un message d'erreur peut être généré, indiquant que la puissance allouée est insuffisante. Une invite peut également inciter l'utilisateur à effectuer une commande alternative acceptable en termes de puissance requise. Dans le cas de l'ordinateur portable 3.1, le PDA 7 connecté n'est pas alimenté, et un message d'erreur peut être affiché, qui informe l'utilisateur que la puissance allouée est insuffisante pour alimenter le périphérique.

Suivant un mode de réalisation illustré sur la figure 3, avant de calculer la nouvelle puissance totale à fournir, le PSE 2 commence par comparer la nouvelle puissance $P'_{Fi}$ requise par le terminal 3 à sa puissance $P_{Fi}$ allouée actuelle.

Ce n'est que si la nouvelle puissance $P'_{Fi}$ requise par le terminal 3 est supérieure à sa puissance $P_{Fi}$ allouée actuelle que les opérations 105 de calcul de la nouvelle puissance totale $P_F$ à fournir, et les opérations suivantes 106 à 111 (comparaison à la puissance maximale $P_M$ admise, régulation ou maintien de la puissance, mise à jour de la puissance totale allouée, envoi du signal éventuel d'acceptation ou de refus), sont effectuées.

Si au contraire la nouvelle puissance $P'_{Fi}$ requise par le terminal est inférieure à sa puissance $P_{Fi}$ allouée actuelle, la puissance allouée est automatiquement réglée à la valeur de la nouvelle puissance requise $P'_{Fi}$. Un signal d'acceptation envoyé par le PSE 2 au terminal 3 (opération 109).

La régulation de la puissance allouée par le PSE 2 à chaque terminal 3 est effectuée aussi souvent que nécessaire.

En particulier, une régulation peut être opérée deux fois de suite dans la situation où un terminal 3 initialement éteint ou déconnecté du réseau 1 et auquel sont branchés des périphériques (par exemple un ordinateur 3.1 avec un PDA 7 ou un disque dur externe connecté sur une prise USB) est soudainement allumé ou connecté au réseau 1. Dans cette situation, au moment de l'allumage ou de la connexion, le terminal 3 ne dispose pas d'une puissance suffisante pour lui permettre de détecter des périphériques. Dans ce cas, la régulation de puissance s'effectue en deux temps, premièrement sur la base de la classe de puissance du terminal 3 seul (une première signature de classe étant produite par le terminal 3 et identifiée par le PSE 2), puis, deuxièmement, après détection des périphériques par le terminal 3, sur la base de la classe de puissance du terminal 3 avec ses périphériques (une seconde signature de classe étant produite par le terminal 3 et identifiée par le PSE 2).

Le procédé qui vient d'être décrit permet d'optimiser, en la régulant à la demande, la puissance fournie par un PSE à un ensemble de terminaux téléalimentés qui lui sont reliés. La puissance allouée à chaque terminal correspondant à la puissance juste nécessaire au mode de fonctionnement actuel, on peut ainsi diminuer considérablement la puissance totale consommée par le PSE et, de la sorte, tout en réalisant de substantielles économies d'énergie, diminuer la puissance maximale de chaque PSE d'un même réseau.

Ainsi, dans le cas de la téléphonie IP, et en appliquant les critères définis dans le tableau ci-dessus, les inventeurs ont constaté qu'à chaque instant, dans une flotte de 100 téléphones, 15 seulement sont en mode de fonctionnement à moyenne puissance (5W), les 85 autres étant en mode veille (0,5W). Dans le cas d'un réseau Ethernet classique, où la puissance allouée à chaque téléphone est au moins égale à la puissance correspondant au mode de fonctionnement à la puissance maximale (15,4W si le terminal est susceptible de consommer plus de 7W), la puissance totale fournie par le PSE à la flotte est de 1540W, tandis que dans le cas d'un réseau mettant en oeuvre le procédé qui vient d'être décrit, la puissance fournie par le PSE à la flotte correspond au strict nécessaire : 117,5W, soit treize fois moins que dans le cas du réseau classique.

Production et identification de la signature

Comme nous l'avons vu, pour chaque mode de fonctionnement d'un terminal 3, une classe est attribuée à la puissance consommée correspondante. Les classes sont inscrites dans une mémoire 17 intégrée au terminal 3. Les signatures correspondantes sont caractérisées par l'expression d'un ou plusieurs paramètres physiques, comme nous allons le voir.

Suivant un premier mode de réalisation, pour un petit nombre de classes différentes (c'est-à-dire pour un petit nombre de modes de fonctionnements différents - par exemple moins de dix), il peut suffire de caractériser chaque signature par un unique paramètre physique, tel que la valeur d'une impédance prédéterminée intégrée au terminal 3.

Le fonctionnement est le suivant. Dès que le terminal 3 détecte en son sein le besoin d'un changement de mode de fonctionnement (par exemple, dans le cas d'un téléphone IP, le décrochement du combiné ou, dans le cas d'un ordinateur portable, la connexion d'un périphérique), son processeur 16 calcule la nouvelle puissance requise $P'_{Fi}$, détermine la classe correspondante et choisit la signature (c'est-à-dire l'impédance) convenable à présenter au PSE 2.

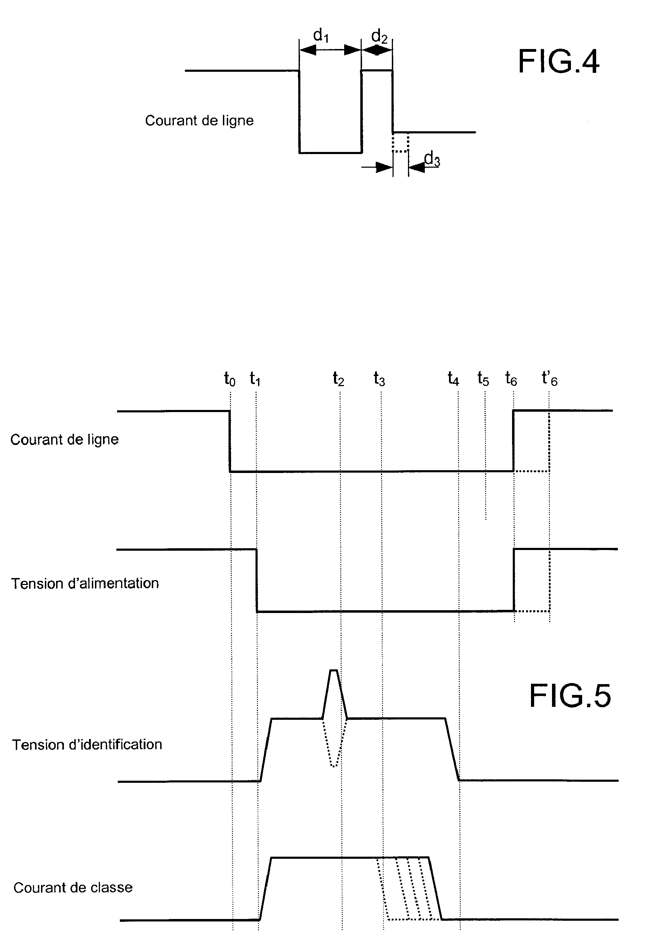

Le terminal 3 génère alors la séquence suivante (Cf. figure 4) :

- coupure du courant $I_{ligne}$ de la ligne Ethernet, pendant une première durée prédéterminée $d_1$,
- remise du courant $I_{ligne}$ sur la ligne pendant une seconde durée prédéterminée $d_2$,
- nouvelle coupure du courant.

Cette séquence, détectée par le PSE 2, permet à celui-ci de reconnaître une requête de changement de puissance présentée par le terminal 3. La précision de cette séquence, qui peut être réitérée pour plus de sécurité, permet au PSE 2 de ne pas confondre la coupure de courant provoquée par le terminal 3 avec un simple faux contact.

Immédiatement après la nouvelle coupure de courant, ou après une durée $d_3$, le terminal 3 présente sa signature, caractéristique de la nouvelle puissance requise, sous forme d'un courant de signature $I_{sign}$ d'une intensité prédéterminée proportionnelle à la valeur de l'impédance choisie. Cette intensité $I_{sign}$ est mesurée par le PSE 2 qui, par le calcul inverse à celui effectué par le terminal 3, en déduit la classe (et donc la valeur) de la nouvelle puissance requise $P'_{Fi}$.

Après la présentation de la signature par le terminal 3, le PSE 2 coupe la tension d'alimentation. Il détermine la recevabilité de la requête, puis remet la tension d'alimentation après un premier temps prédéterminé, caractéristique d'une acceptation de la modification de la puissance allouée au terminal 3, ou après un second temps prédéterminé (de préférence plus long que le premier), caractéristique d'un refus d'une telle modification.

Suivant un second mode de réalisation, pour un nombre important de classes différentes (c'est-à-dire pour un nombre important de modes de fonctionnements différents - par exemple plusieurs dizaines), la signature est caractérisée par une combinaison de plusieurs paramètres physiques, tels que, d'une part, la valeur d'une impédance prédéterminée, intégrée au terminal 3 (qui s'exprime par la valeur d'un courant de signature $I_{sign}$ commandé par le terminal 3, qui est fonction de cette impédance), et, d'autre part, un temps $t_{sign}$ - également prédéterminé - de réponse à la présentation par le PSE 2 d'un signal de tension.

Le fonctionnement est le suivant. Dès que le terminal 3 détecte en son sein le besoin d'un changement de mode de fonctionnement (par exemple, dans le cas d'un téléphone IP, le décrochement du combiné ou, dans le cas d'un ordinateur portable, la connexion d'un périphérique), son processeur 16 calcule la nouvelle puissance requise $P'_{Fi}$, détermine la classe correspondante et la signature convenable (sous forme d'une combinaison d'une impédance et d'un temps de réponse $t_{sign}$ prédéterminés) à présenter au PSE 2.

La présentation de la signature s'effectue alors en deux phases (Cf. figures 4 et 5) : une première phase de présentation de l'impédance, et une deuxième phase de présentation du temps de réponse.

La première phase comprend les étapes suivantes :

- coupure par le terminal 3 du courant $I_{ligne}$ de la ligne Ethernet à un instant initial $t_0$, et déconnexion simultanée de la charge du terminal 3,
- remise par le terminal 3 du courant de ligne $I_{ligne}$ pendant une seconde durée prédéterminée,
- nouvelle coupure par le terminal 3 du courant $I_{ligne}$.

Le PSE 2, qui est programmé pour reconnaître à cette séquence une requête de changement de puissance présentée par le terminal 3, coupe alors la tension d'alimentation $V_{alim}$, à un instant $t_1$. Le terminal 3 présente sur la ligne Ethernet 5 son impédance choisie, ce qui se traduit par la génération d'un courant de signature $I_{sign}$ dont la valeur est mesurée par le PSE 2. Bien que cet ordre opératoire soit préféré, ces deux opérations peuvent être interverties, la présentation par le terminal 3 de son impédance pouvant avoir lieu avant la coupure par le PSE 2 de la tension d'alimentation $V_{alim}$.

Le PSE 2 présente ensuite sur la ligne une tension dite d'identification, d'une valeur différente (de préférence inférieure) à celle de la tension d'alimentation. Cette tension d'identification est par exemple comprise entre 15,5V et 20V. En réponse, le terminal 3 génère sur la ligne un courant $I_{iden}$ d'identification.

Après un certain délai débute la deuxième phase : le PSE 2 génère à un instant $t_2$ une impulsion de synchronisation du terminal 3, sous forme d'un pic de tension, qui initialise la mesure du temps de réponse $t_{sign}$ du terminal 3. A un instant $t_3=t_2+t_{sign}$, le terminal 3 coupe le courant d'identification $I_{iden}$. Le PSE 2 mesure le temps de réponse $t_{sign}$ et déduit du doublet ($I_{sign}$, $t_{sign}$), caractéristique de la signature ainsi présentée par le terminal 3, la classe (et donc la valeur) de la nouvelle puissance $T'_{Fi}$ requise par celui-ci.

Pour illustrer la diversité des classes de puissance, on a représenté en pointillés sur la figure 5 plusieurs possibilités de coupure du courant d'identification $I_{iden}$, selon la valeur du temps de réponse $t_{sign}$ (c'est-à-dire suivant la valeur de la signature et donc de la classe).

Le PSE 2 coupe ensuite, à un instant $t_4$, la tension d'identification.

Après une durée prédéterminée suivant l'instant $t_3$, le terminal 3 reconnecte sa charge à un instant $t_5$, en prévision de la remise de la tension d'alimentation.

Après avoir déterminé le caractère acceptable de la requête de changement de puissance, le PSE 2 remet la tension d'alimentation $V_{alim}$, soit à un premier instant $t_6$ prédéterminé, caractéristique d'une acceptation de la modification de la puissance allouée au terminal 3, soit à un second instant $t'_6$ prédéterminé différent du premier $t_5$ (de préférence postérieur à celui-ci), caractéristique d'un refus d'une telle modification.

La procédure qui vient d'être décrite permet d'identifier, parmi une pluralité de classes de puissance, la classe de puissance requise par le terminal 3 sans aucun échange de données entre celui-ci et le PSE 2, et donc sans qu'il soit nécessaire de programmer l'adresse réseau du PSE 2 dans le terminal 3, ce qui garantit la simplicité et la fiabilité de l'ensemble du procédé de régulation de la puissance.

En variante, afin de diminuer autant que possible le temps de « négociation » (c'est-à-dire la durée séparant l'instant auquel est détecté un besoin de changement de puissance dans le terminal, et l'instant auquel la réponse du PSE est transmise au terminal), et donc le temps pendant lequel le terminal n'est plus alimenté électriquement, on supprime la phase d'interruption du courant de ligne pendant un temps calibré (tel qu'illustré sur la figure 4), de sorte que seules sont conservées les étapes comprises entre la coupure (à $t_1$) et la remise (à $t_6$ ou $t'_6$) par le PSE de la tension d'alimentation.

Agencement du terminal et du PSE

Afin de permettre la régulation de la puissance allouée, et en particulier la production et l'identification de la signature de classe, tel que décrit ci-dessus, le terminal 3 et le PSE 2 et présentent des agencements différents des terminaux et PSE connus.

Le terminal 3, en particulier, comprend des moyens pour détecter en son sein un besoin de changement de puissance. Ces moyens peuvent comprendre des moyens pour mesurer en permanence le besoin en puissance propre du terminal et le besoin en puissance supplémentaire requis par un (des) éventuel(s) périphérique(s), ainsi que, dans ce cas, des moyens pour calculer la puissance totale requise par l'ensemble formé par le terminal et de son (ses) périphérique(s), par exemple sous la forme d'un programme spécifique P implémenté dans son processeur 16.

Le terminal 3 comprend par ailleurs des moyens (par exemple sous la forme de lignes de commande dans le programme P) pour sélectionner dans la mémoire 17, parmi les classes de puissance inscrites, correspondant chacune à un mode de fonctionnement particulier, une classe de puissance correspondant à la nouvelle puissance requise par le terminal 3 lorsqu'un besoin de changement de mode de fonctionnement a été détecté.

Le terminal 3 comprend en outre au moins un circuit intégré 18 formant interface entre la ligne Ethernet 5 et le processeur 16, ce circuit intégré 18 comprenant :

- des moyens 19 pour produire une signature de téléalimentation, c'est-à-dire une signature permettant au PSE de détecter la capacité du terminal à être téléalimenté, comme décrit dans la demande précitée N°EP 1 100 226 (ces moyens peuvent se présenter sous la forme d'une mémoire dans laquelle est inscrite la signature de téléalimentation, ou sous la forme d'une borne à laquelle est raccordée une impédance prédéterminée, externe au circuit intégré 18),
- des moyens 20 pour produire la signature de classe, caractéristique de la classe sélectionnée, qui comprennent par exemple une bascule commandée permettant la connexion momentanée, sur la ligne Ethernet 5, d'une impédance choisie parmi un groupe d'impédances différentes,
- des moyens 21 pour détecter le signal, en provenance du PSE 2, d'acceptation ou de refus de la requête de changement de puissance,
- une bascule 22 commandée permettant la connexion sur la ligne Ethernet d'un convertisseur 23 de courant continu (DC/DC) intégré à l'alimentation du terminal 3,
- des moyens 24 de communication avec le processeur 16 du terminal 3, ces moyens étant agencés pour :

  - recevoir une commande du processeur 16 pour la formulation d'une requête de changement de puissance, et

- transmettre au processeur 16, en retour, la réponse du PSE 2 (acceptation ou refus de la requête de changement de puissance).

Le terminal 3 comprend en outre des moyens 25 pour :

- soit changer de mode de fonctionnement après détection par le terminal 3 d'un signal d'acceptation par le PSE 2 de la requête de changement de puissance,
- soit maintenir le mode de fonctionnement actuel après détection par le terminal 3 d'un signal de refus par le PSE 2 de la requête de changement de puissance.

Le PSE 2 comprend quant à lui au moins un circuit intégré 26 formant interface entre la ligne Ethernet 5 et le processeur 15. Ce circuit 26 comprend :

- des moyens de détection 27 agencés pour :

  - identifier une signature de téléalimentation produite par un terminal 3,
  - identifier une signature de classe produite par le terminal 3 lors d'une requête de changement de puissance,
  - des moyens 28 de communication avec le processeur 15 du PSE 2, ces moyens étant agencés pour :

    - transmettre au processeur 15 la requête de changement de puissance du terminal 3,
    - recevoir en retour une réponse du processeur 15 (acceptation ou refus de la requête de changement de puissance),

  - des moyens 29 de transmission au terminal de la réponse (acceptation ou refus) à la requête de changement de puissance.

Le processeur 15 du PSE 2 comprend quant à lui des moyens pour analyser la requête de changement de puissance reçue du terminal 3 par l'intermédiaire du circuit 26, et des moyens pour déterminer la recevabilité de la requête (par exemple sous forme d'un programme P' implémenté sur le processeur 15), incluant notamment :

- des moyens de calcul de la nouvelle puissance $P'_{Fi}$ requise par le terminal 3 en fonction de la signature de classe identifiée,
- des moyens de comparaison de cette nouvelle puissance requise avec la puissance actuelle $P_{Fi}$ allouée,
- des moyens de calcul de la puissance totale $P_F$ à fournir par le PSE 2 et des moyens de comparaison de cette puissance totale $P_F$ avec la puissance maximale admise $P_M$.

Par ailleurs, le circuit 26 comprend de préférence plusieurs connexions 30 à des lignes Ethernet 5 pour permettre le raccordement au PSE 2 d'une pluralité de terminaux 3.

**Revendications**

1. Procédé de téléalimentation d'un terminal (3) dans un réseau informatique local (1) au moyen d'un dispositif (2) de téléalimentation, **caractérisé en ce qu'**il comprend les opérations consistant à :

   - détecter au sein du terminal (3) un besoin de changement de la puissance électrique requise par celui-ci;
   - générer une requête de changement de puissance ;
   - déterminer si cette requête est acceptable ;
   - si cette requête est décrétée acceptable, allouer une nouvelle puissance à délivrer au terminal (3) par le dispositif (2) de téléalimentation, égale à la nouvelle puissance requise ;
   - si cette requête est décrétée inacceptable, maintenir l'allocation actuelle de la puissance à délivrer par le dispositif (2) de téléalimentation au terminal (3).

2. Procédé de téléalimentation selon la revendication 1, dans lequel la détermination du caractère acceptable de la requête de changement de puissance comprend les opérations consistant à :

   - calculer la nouvelle puissance totale ($P_F$) à fournir par le dispositif (2) de téléalimentation ; et
   - comparer cette nouvelle puissance totale à fournir à une puissance maximale admise ($P_M$) prédéterminée ;

la requête étant décrétée acceptable si la nouvelle puissance totale ($P_F$) à fournir par le dispositif (2) de téléalimentation est inférieure à la puissance maximale admise ($P_M$), et inacceptable si la nouvelle puissance totale ($P_F$) à fournir par le dispositif (2) de téléalimentation est supérieure à la puissance maximale admise ($P_M$).

3. Procédé de téléalimentation selon la revendication 1 ou 2, dans lequel la détermination du caractère acceptable de la requête de changement de puissance comprend une opération consistant à comparer la nouvelle puissance requise ($P'_{Fi}$) à la puissance actuelle ($P_{Fi}$) allouée au terminal (3), la requête de changement de puissance étant décrétée acceptable si la nouvelle puissance requise ($P'_{Fi}$) est inférieure à la puissance actuelle ($P_{Fi}$) allouée.

4. Procédé de téléalimentation selon l'une des revendications 1 à 3, qui comprend une opération de transmission au terminal (3) d'une information d'acceptation ou de refus de la requête de changement de puissance, selon le caractère acceptable ou non de celle-ci.

5. Procédé de téléalimentation selon l'une des revendications 1 à 4, dans lequel la génération de la requête de changement de puissance comprend les opérations consistant pour le terminal (3) à :

- sélectionner parmi une pluralité de classes de puissances différentes une classe correspondant à la nouvelle puissance ($P_{Fi}$) requise ; et
- produire une signature correspondant à la classe de puissance sélectionnée ;

et dans lequel la détermination du caractère acceptable de la requête de changement de puissance comprend une opération d'identification par le dispositif (2) de téléalimentation de la signature produite par le terminal (3).

6. Dispositif (2) de téléalimentation d'un terminal (3) dans un réseau (1) local, ce dispositif (2) étant **caractérisé en ce qu'**il comprend :

- des moyens (27) de détection d'une requête de changement de puissance générée par le terminal (3) ;
- des moyens (P') pour déterminer le caractère recevable de la requête de changement de puissance.

7. Dispositif (2) de téléalimentation selon la revendication 6, qui comprend des moyens (29) de transmission au terminal d'une information caractéristique de l'acceptation ou non de la requête de changement de puissance.

8. Dispositif (2) de téléalimentation selon la revendication 6 ou 7, qui comprend des moyens (P') de calcul d'une puissance totale ($P_F$) à fournir par le dispositif (2) de téléalimentation, en fonction de la nouvelle puissance ($P_{Fi}$) requise par le terminal (3), et des moyens (P') de comparaison de cette puissance totale à fournir avec une puissance maximale admissible ($P_M$).

9. Dispositif (2) de téléalimentation selon l'une des revendications 6 à 8, qui comprend des moyens (P') de comparaison de la nouvelle puissance ($P_{Fi}$) requise par le terminal (3) avec la puissance actuelle allouée ($P_{Fi}$).

10. Dispositif (2) de téléalimentation selon l'une des revendications 6 à 9, qui comprend :

- des moyens (27) d'identification d'une signature produite par le terminal, caractéristique de la nouvelle puissance ($P_{Fi}$) requise, et
- des moyens (P') pour déduire de cette signature la nouvelle puissance ($P_{Fi}$) requise.

11. Terminal (3) téléalimenté, qui comprend :

- des moyens (16) pour détecter un besoin de changement de la puissance requise par le terminal (3) ; et
- des moyens (20) pour produire une requête de changement de puissance.

12. Terminal (3) téléalimenté selon la revendication 11, qui comprend :

- des moyens (P) pour sélectionner parmi une pluralité de classes de puissance prédéterminées une classe correspondant à une nouvelle puissance ($P_{Fi}$) requise ;
- des moyens (20) pour produire une information caractéristique de la classe de puissance sélectionnée.

13. Terminal (3) téléalimenté selon la revendication 11 ou 12, qui comprend des moyens (21) pour détecter une information d'acceptation ou de refus de la requête de changement de puissance.

14. Terminal (3) téléalimenté selon la revendication 13, qui comprend des moyens (25) pour :

- soit changer de mode de fonctionnement après détection d'une information d'acceptation de la requête de changement de puissance,
- soit maintenir le mode de fonctionnement actuel après détection d'une information de refus de la requête de changement de puissance.

FIG.1

FIG.2

EP 1 848 146 A1

101

DETECTER LE MODE DE
FONCTIONNEMENT DU TERMINAL

CHANGEMENT
DE MODE DE
FONCTIONNEMENT
DEMANDE ?

NON

OUI

FIG.3

102

DETERMINER LA NOUVELLE
PUISSANCE REQUISE

103

PRODUIRE UN SIGNAL
CARACTERISTIQUE DE LA
NOUVELLE PUISSANCE REQUISE

105

CALCULER LA NOUVELLE
PUISSANCE A FOURNIR PAR LE PSE

104

DETECTER LE SIGNAL

COMPARER LA NOUVELLE
PUISSANCE A FOURNIR A LA
PUISSANCE MAXIMALE ADMISE

106

$P'_{Fi} < P_{Fi}$ ?

NON

OUI

$P_F \leq P_M$ ?

107

ALLOUER UNE NOUVELLE
PUISSANCE A DELIVRER, EGALE A
LA PUISSANCE REQUISE

NON

110

108

METTRE A JOUR LA PUISSANCE
TOTALE ALLOUEE PAR LE PSE

MAINTENIR L'ALLOCATION DE LA
PUISSANCE ACTUELLE
A DELIVRER AU TERMINAL

109

ENVOYER AU TERMINAL
UN SIGNAL D'ACCEPTATION

ENVOYER AU TERMINAL
UN SIGNAL DE REFUS

111

FIG.4

Courant de ligne

FIG.5

Courant de ligne

Tension d'alimentation

Tension d'identification

Courant de classe

**Office européen**

**des brevets**

**RAPPORT DE RECHERCHE EUROPEENNE**

Numéro de la demande

EP 06 30 0387

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ANONYMOUS: "Power over Ethernet: Cisco Inline Power and IEEE 802.3af" CISCO SYSTEMS WHITE PAPER, [Online] 2004, XP002383688 | 1,2,4-8, 10-14 | INV. H04L12/10 |
| Y | * page 5, alinéa 4 * * page 6, alinéa 1-3 * * page 9, alinéa 4 - page 11, alinéa 2 * ----- | 3,9 | ADD. H04L12/44 |
| Y | US 2005/268120 A1 (SCHINDLER FREDERICK R ET AL) 1 décembre 2005 (2005-12-01) * alinéas [0022] - [0024], [0028], [0029] * ----- | 3,9 | |
| A | ANONYMOUS: "Power Over Ethernet On Cisco Catalyst 6500 Series Switches"[Online] 24 mars 2006 (2006-03-24), pages 1-18, XP002400264 Extrait de l'Internet: URL:http://www.cisco.com/en/US/products/hw/switches/ps708/products_white_paper0900ae cd80233a77.shtml> [extrait le 2006-09-22] * page 10, alinéa 2 - page 16 * ----- | 1-14 | |

DOMAINES TECHNIQUES RECHERCHES (IPC)

H04L

Le présent rapport a été établi pour toutes les revendications

| Lieu de la recherche | Date d'achèvement de la recherche | Examinateur |
|---|---|---|
| Munich | 25 septembre 2006 | Reeck, Guido |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

................................................................

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 06 30 0387

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-09-2006

| Document brevet cité au rapport de recherche | Date de publication | Membre(s) de la famille de brevet(s) | Date de publication |
|---|---|---|---|
| US 2005268120 A1 | 01-12-2005 | WO 2005114362 A2 | 01-12-2005 |

EPO FORM P0460

Pour tout renseignement concernant cette annexe : voir Journal Officiel de l'Office européen des brevets, No.12/82

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1100226 A